Europäisches Patentamt

European Patent Office

Office européen des brevets

(19)

(11) Publication number: 0 247 623
A2

# EUROPEAN PATENT APPLICATION

(12)

(21) Application number: 87107825.9

(22) Date of filing: 29.05.87

(51) Int. Cl.⁴: **G07F 7/10**

(30) Priority: 30.05.86 JP 126897/86

(43) Date of publication of application:
02.12.87 Bulletin 87/49

(84) Designated Contracting States:
AT BE CH DE ES FR GB GR IT LI LU NL SE

(71) Applicant: OMRON TATEISI ELECTRONICS
CO.
10, Tsuchido-cho Hanazono Ukyo-ku
Kyoto 616(JP)

(72) Inventor: Nagata, Masanori Omron Tateisi
Electronics Co.
Patent Dept. 20 Igadera Shimo-Kaiinji
Nagaokakyo-City Kyoto 617(JP)
Inventor: Yamashita, Susumu Omron Tateisi
Electronics Co.
Patent Dept. 20 Igadera Shimo-Kaiinji
Nagaokakyo-City Kyoto 617(JP)
Inventor: Okahashi, Makoto Omron Tateisi
Electronics Co.
Patent Dept. 20 Igadera Shimo-Kaiinji
Nagaokakyo-City Kyoto 617(JP)

(74) Representative: WILHELMS, KILIAN &
PARTNER Patentanwälte
Eduard-Schmid-Strasse 2
D-8000 München 90(DE)

(54) IC card transaction system.

(57) An IC card transaction system is disclosed in which a desired part of the data required to complete a transaction is stored in an IC card by a customer in advance of transaction processing. An automatic transaction processing unit reads the transaction data stored in the card and receives any additional data required to complete a transaction from the customer, which was not previously stored in the card.

EP 0 247 623 A2

Xerox Copy Centre

## IC Card Transaction System

### Background of the Invention

#### 1. Field of the Invention

The present invention relates to an IC card transaction system comprising an automatic transaction processing unit and an IC card which is inserted into and used in conjunction with the automatic transaction processing unit. More particularly, the present invention pertains to an IC card transaction system which is so designed that certain operations, which have heretofore been conducted by a user at the automatic transaction processing unit, can be performed with the IC card in advance of a customer visiting the automatic transaction processing unit.

#### 2. Discussion of Prior Art

Automatic transaction processing units are known which are operated directly by customers as on-line terminal units at banking institutions or the like. Recently, the capability of this type of automatic transaction processing unit has rapidly been increased so that a single unit is now capable of performing a variety of transactions such as deposit and withdrawal processing, balance inquires, bankbook entries and transfer transactions, in addition to payment processing. As a result, users are now required to perform an increased number of operations for each transaction such as selection of the kind of a desired transaction, resulting in the time required per transation being increased. Further, with advanced automatic transaction processing units, inexperienced customers may fail to complete all the desired transaction processing operations by themseleves. For this reason, the operating efficiency of automatic transaction processing units has been lowered, and it is also often necessary to provide a person to assist customers.

In order to solve the above-described problems, the present applicant has already proposed a novel transaction system that utilizes IC cards, which are now put into practical use, in European Patent Application No. 85103117.9 which was laid-open into public inspection as Publication No. 0 162 221. According to the proposed system, a user conducts transaction processing operations, which have heretofore been performed at an automatic transaction processing unit, at an IC card that has an input means, and transaction processing data resulting from the input is stored in the IC card. When the IC card is inserted into the automatic transaction processing unit, the processing unit can process a particular transaction on the basis of data read from the IC card in place of data which would otherwise be input by the user through a keyboard. Thus, each individual user can input transaction processing data in advance into his own IC card and therefore can effect a reliable input operation without being restricted by time. Since a desired transaction can be processed simply by inserting the IC card into the automatic transaction processing unit, the time during which the automatic transaction processing unit is occupied per transaction is reduced, so that it is advantageously possible to improve the operating efficiency of the automatic transaction processing unit. Further, since data such as an identification code number and the amount of money handled on a transaction can be input in advance, and at any place, there is, advantageously, no fear of the identification code number or other entered data being seen by others.

However, the invention described in the above-described applications does have some disadvantages. Since all the necessary transaction processing data must be input to the IC card in advance, it is impossible to decide or change the contents of a transaction at the time of the transaction. Further, if the IC card is lost after data entry, it can be used in an unauthorized manner by the finder, which means that the proposed system is somewhat unsatisfactory in terms of safety.

### Objects, Features and Advantages of the Invention

In view of the above-described disadvantages, it is an object of the present invention to provide an IC card transaction system wherein a part of the data necessary for transaction processing is entered into an IC card in advance, while the remainder of the required data is entered directly to the automatic transaction processing unit, whereby it is possible to provide freedom to enable the user to decide, or change, the contents of a transaction at the time of a transaction and to ensure the safety of a customer's account.

### Summary of the Invention

In the IC card transaction system according to the present invention, the entry of transaction processing data which has heretofore been conducted at an automatic transaction processing unit, such as the selection of the kind of a particular transaction and the entry of the amount of money involved in the transaction, can be performed with an IC card, and the input data is stored in transaction processing data storage means within the IC card. The automatic transaction processing unit is arranged to receive the IC card and process a transaction using the transaction processing data stored in the IC card. The processing unit is further arranged to receive additional transaction processing data which is input directly from the user, only when the additional transaction processing data is necessary and has not been previously stored in the IC card in advance.

By virtue of the above-described arrangement, it is possible to reduce the time during which the automatic transaction processing unit is occupied per transaction. In addition, the contents of a transaction can be determined or changed at the time of the transaction (at the time when the user arrives at the automatic transaction processing unit). Further, since only a part of transaction processing data is stored, it is possible to enhance safety should the IC card be lost, since a transaction cannot be completed without the remainder of the transaction processing data.

The present invention thus provides an IC card transaction system comprising: an IC card having transaction processing data receiving means for receiving at least a desired part of transaction processing data used for each individual transaction processing, including the kind of a particular transaction and the amount of money involved in the transaction, and transaction processing data storage means for storing the transaction processing data entered by the transaction processing data receiving means; and an automatic transaction processing unit adapted to receive the IC card and process a transaction, the unit having transaction processing data reading means for reading out transaction processing data required in each of the steps in processing of a transaction from the transaction processing data storage means, and an input data receiving means for receiving the input of additional necessary transaction processing data when it has not yet been stored in the transaction processing data storage means.

In the above-described arrangement, a user who possesses the IC card inputs a desired part of the transaction processing data to the IC card before he goes to the automatic transaction processing unit to process a desired transaction. At a banking institution or the like, the user inserts the IC card into the automatic transaction processing unit. In consequence, the automatic transaction processing unit reads transaction processing data from the IC card and processes each of the steps for a particular transaction on the basis of the read data. When there is necessary transaction processing data which has not been input to the IC card in advance, the automatic transaction processing unit elicits this data from a customer. When the customer inputs this data, the transaction processing is completed.

Thus, the information which a customer desires to be finally determined by him only at the automatic transaction processing unit can be directly input through the keyboard, so that it is possible to conduct a transaction which is desired at the time of a transaction within a minimum period of time (the time during which the automatic transaction processing unit is occupied). Further, since only a part of the transaction processing data is stored in the IC card, even if this card should be lost or stolen, there is no fear of the card being improperly used, so that it is possible to ensure the safety of a customer's account.

The above objects, advantages and features of the invention will be better understood from the following description of the invention which is provided in connection with the accompanying drawings.

## Brief Description of the Drawings

Figs. 1(A) and 1(B) show the external appearance of an IC card used in an IC card transaction system in accordance with one embodiment of the present invention, Fig. 1(A) showing the obverse surface of the card, and Fig. 1(B) showing the reverse surface of the card;

Fig. 2 is a block diagram of a control section in the IC card;

Fig. 3 shows a part of the arrangement of a mask programmed ROM and a RAM which are incorporated in the IC card;

Fig. 4 shows the external appearance of an ATM used in the IC card transaction system;

Fig. 5 is a block diagram of a control section in the ATM;

Figs. (6A), 6(B) and 6(C) are flow charts showing the operation of the control section in the IC card; and

Figs. &(A) and 7(B) are flow charts showing the operation of the control section in the ATM.

## Detailed Description of the Invention

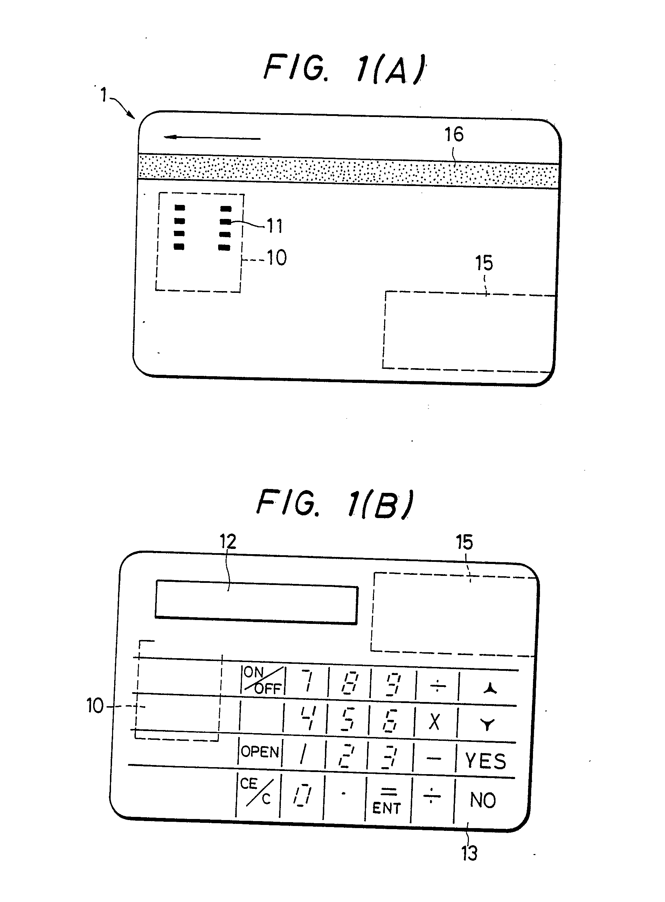

Figs. 1(A) and 1(B) respectively show the external appearance of the obverse and reverse surface of an IC card I which is used in an IC card transaction system in accordance with one embodiment of the present invention. The obverse surface of the IC card is provided with a magnetic strip 16 which is used when a transaction is processed with a conventional magnetic card reader/writer. An LSI- (large scale integrated) circuit 10 which includes a microcomputer is incorporated inside the card and in the vicinity of the magnetic strip. Contacts 11, which are used to exchange data with the IC card reader/writer of the automatic transaction processing unit, are provided on the obverse surface of the card at the position where the LSI is incorporated, and a flat plate-shaped battery 15 is incorporated inside the card and at the lower side thereof.

The reverse surface of this IC card 1 is provided with an LCD dot matrix display 12 and a keyboard 13. The display 12 consists of display sections for 10 characters, each character display section consisting of 5 x 7 LCD dots. The display 12 displays brief guidance information corresponding to each operation step executed by the user, such as inputting data, etc. The IC card, when not used as a card for a financial transaction, can also be used as a card-type calculator in which case the display 12 displays registered numbers and results of a calculation.

The keyboard 13 comprises an ON/OFF key, an OPEN key, a CE/C key, ten numerical keys, an ENT key, four arithmetic operation keys, a YES key, a NO key, etc. These key are employed to enter transaction processing data and also used to execute calculation when the card is employed as a calculator.

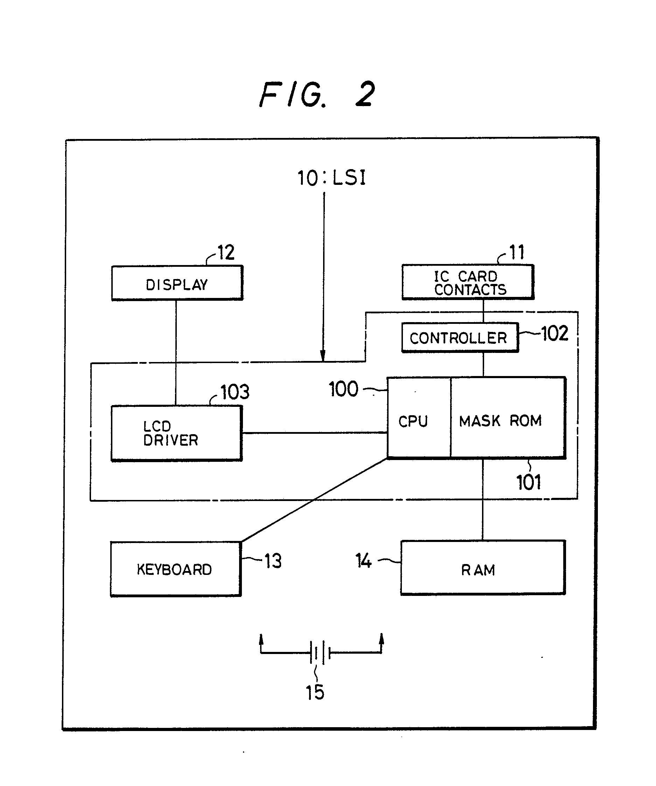

Fig. 2 is a block diagram of the control section in the IC card. The LSI circuit 10 comprises a CPU 100, a mask programmed ROM 101, a controller 102 for the contacts 11, and an LCD driver 103 for controlling the display 12. The contacts 11 are connected to the controller 102, and the display 12 is connected to the LCD driver 103. The keyboard 13 and an external RAM 14 are connected to the CPU 100. The RAM 14 is backed up by the battery 15.

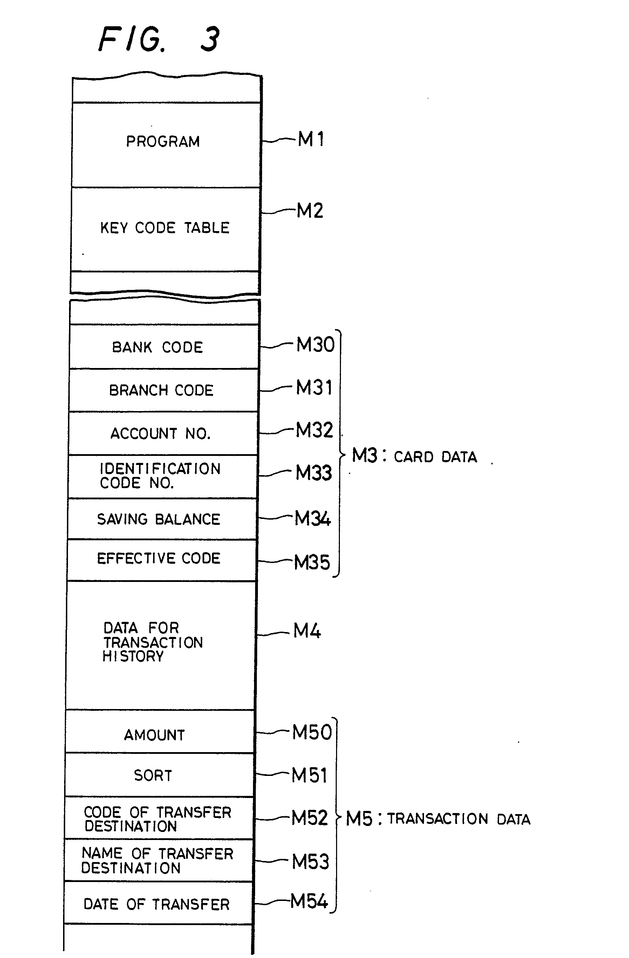

Fig. 3 shows a part of the arrangement of the mask programmed ROM 101 and the RAM 14. In the mask programmed ROM 101 are set a control program (M1) and a key code table (M2) that stores the contents of a selected processing function corresponding to a numerical value input through the keyboard 13. In the RAM 14 is stored card data (M3) consisting of a bank code (M30), a branch code (M31), an account number (M32), an identification code number (M33), a savings balance (M34) and an effective code (M35). Further, 100 records (M4) in the history of transactions conducted with the IC card are stored in the RAM 14. When the user selects a transaction history display function by actuating the keyboard 13, the transaction history data can be displayed on the display 12. The RAM 14 is further provided with a transaction processing data storage area (M5) for storing necessary transaction processing data used on a transaction which is to be conducted next. The transaction processing data storage area (M5) consists of an area (M50) for storing the amount of money involved in a transaction, an area (M51) for storing the kind of a particular transaction, an area (M52) for storing the code of a transfer destination, an area (M53) for storing the name of a transfer destination and an area (M54) for storing the date of transfer. Data which is required for a particular transaction (receipt, payment, transfer, etc.) is stored exclusively in memory area (M5).

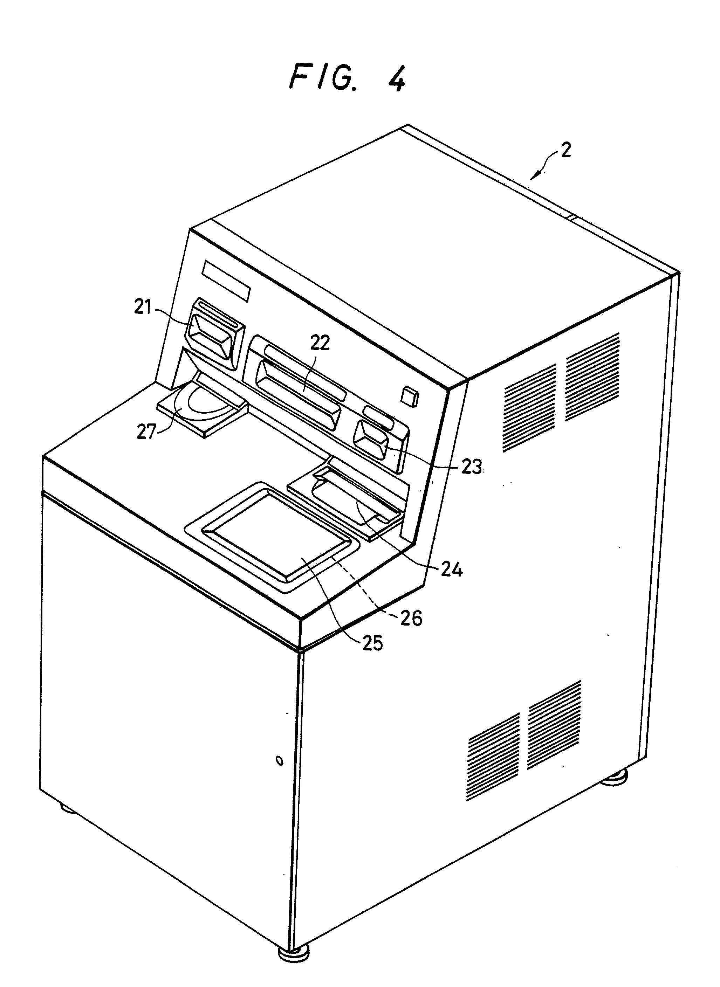

Fig. 4 shows the external appearance of an ATM which is used in the IC card transaction system. The ATM has a vertical control panel on its front side, the control panel being provided with an IC card insertion opening 21 for inserting the IC card 1, a bankbook insertion opening 22 and a magnetic card insertion opening 23. The horizontal control panel of the ATM is provided with a bank note receiving and paying opening 24, a CRT 25, and a coin receiving and paying opening 27. The CRT 25 is used to guide and display the functions of the ATM, the operation procedure and the like and also displays input keys which are to be depressed by a customer. A transparent touch panel switch 26 is installed on the surface of the CRT 25 for detecting the depression of various keys which are displayed on the CRT 25.

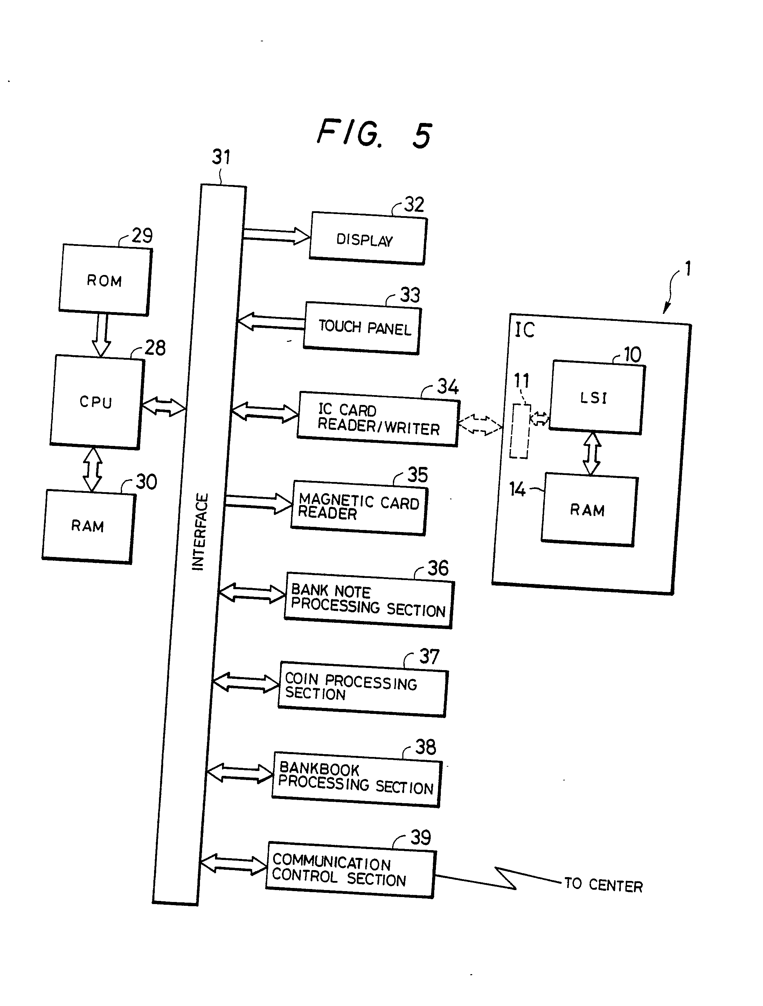

Fig. 5 is a block diagram of the control section of the ATM. To a CPU 28 of the ATM 2 are connected a ROM 29 storing programs and the like, a RAM 30 storing data and the like, and an interface 31. To the interface 31 are connected a display device 32 including the CRT 25, a touch panel unit 33 including the touch panel switch 26, an IC card reader/writer 34 which exchanges data and the like with an IC card inserted into the IC card insertion opening 21, a magnetic card reader 35 which reads and writes data in relation to a magnetic card inserted into the magnetic card insertion opening 23, a bank note processing section 36 which processes the receipt and payment of bank notes, a coin processing section 37 which processes the receipt and payment of coins, a bankbook processing section 38 which prints results of transactions on bankbooks or slips, and a communication control section 39 for communication with a center processing unit.

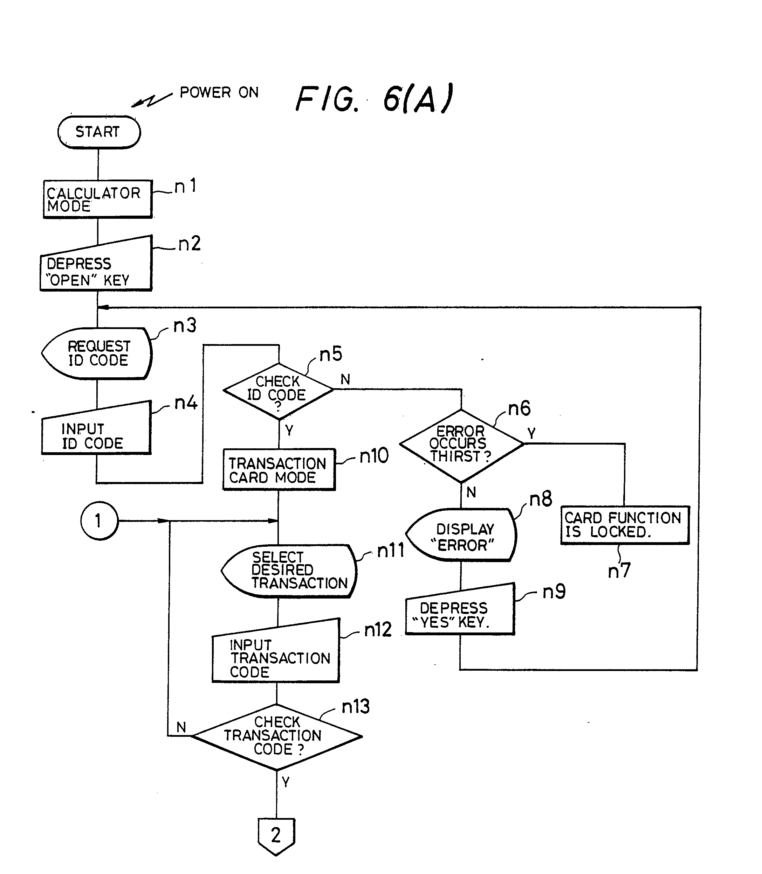

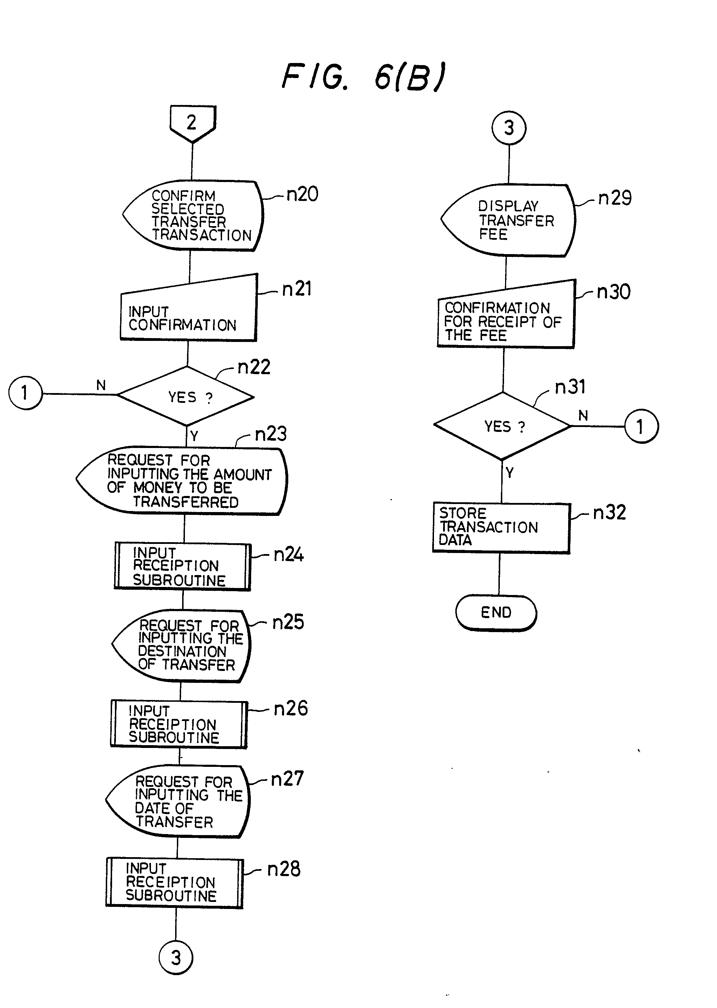

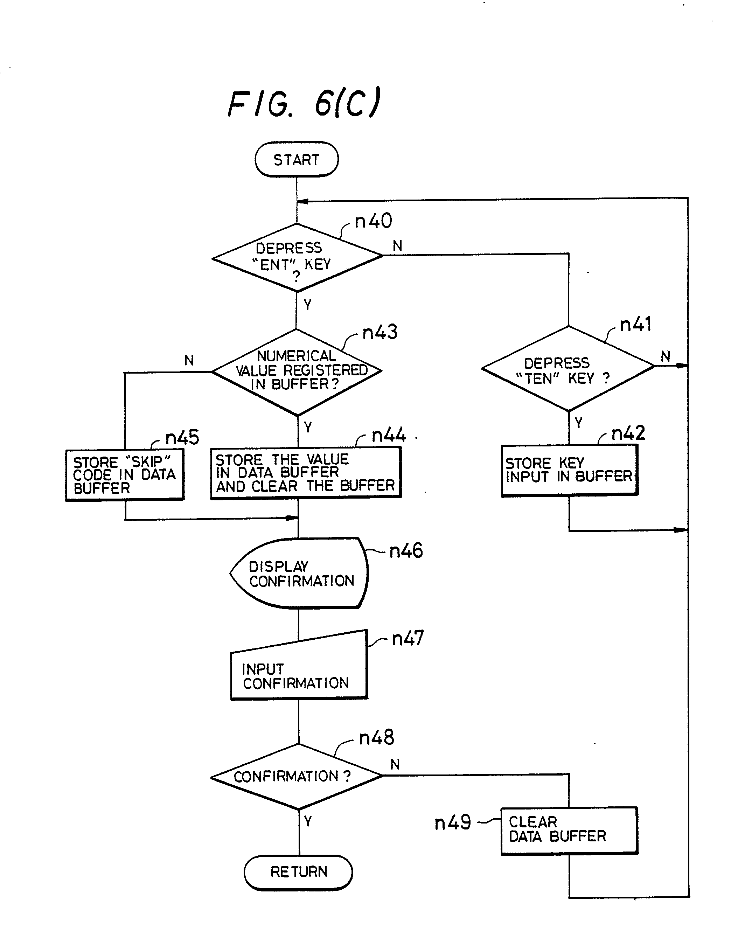

Figs. 6(A), 6(B) and 6(C) depict a flow chart showing the operation of the control section in the IC card.

Fig. 6(A) shows a processing content selecting operation. When the ON/OFF key of the keyboard 13 is depressed, power is supplied to the LSI 10, and the IC card first operates as a calculator and is started (step n1:"Step ni" will hereinafter be referred to as "ni"). Next, when the OPEN key is depressed (n2), the display 12 is instructed to request the user to enter his identification code number in order to permit acceptance of transaction processing data (n3). The identification code number is entered in n4, and a determination is made (n5) as to whether or not the entered code number is coincident with the identification code number (M33) which has been stored in the card data storage area (M3). If NO, the process proceeds to n6, where a determination is made as to whether or not this identification code number entry error is the third by making reference to the effective code storage area (M35). The effective code is a number which represents the number of times of successive occurrences of an identification code number entry error. If the identification code number entry error has occurred three or more times, the card function is locked and processing is finished (n7). If the identification code number entry error has not yet occurred three time, "ERROR" is displayed on the display 12 (n8), and after a confirmation entry (depression of the YES key) has been made by the user (n9), the process returns to (n3). When it is confirmed in (n5) that the entered identification code number is coincident with the stored one, the process proceeds to (n10), where the mode is changed to the transaction card mode, and the display 12 is instructed to request the user to enter data for selecting desired transaction (n11). After the input of the transaction code has been made (n12), the input transaction code is checked in (n13). If there is no corresponding transaction code, the process returns to (n11) in order to request the user to enter the code again, whereas, when there is a corresponding transaction code, the process proceeds to a step of performing a transaction processing data receiving operation.

Fig. 6(B) shows a transaction processing data receiving operation which is carried out when a transfer transaction is selected. First, the display 12 is instructed to request the user to confirm the selected transfer transaction in (n20), and a confirmation entry is received from the user in (n21). When the YES key is depressed by the user, the process proceeds to (n23) and further to the steps following it, whereas, when the NO key is depressed, the process returns to (n11) (n22).

The display 12 is instructed to request the user to enter the amount of money desired to be transferred in (n23), and an entry reception subroutine for controlling the entry of the amount of money to be transferred is executed in (n24). This subroutine will be described later with reference to Fig. 6(C). Next, the display 12 is instructed to request the user to enter the destination of the transfer and the data of transfer and the entry reception subroutine is executed in a similar manner (n25 to n28), and finally, a transfer fee is displayed (n29). After the confirmation with respect to the displayed transfer fee has been entered (n30 and n31), the entered data are stored in the transaction processing data storage area (M5) and the operation is thus completed. If the NO key is depressed in (n30), the process proceeds to (n31), and when NO is the answer of the decision made in (n31), the process returns to (n11), where the entry of data is made again.

Fig. 6(C) shows the entry reception subroutine. The process stands by until depression of the ENT key is detected in (n40) or until depression of one of the numeral keys is detected in (n41). If the numeral keys are depressed, the input numerical value is buffered in a register buffer (n42), and the process then returns to the stand-by routine.

On the other hand, when the ENT key is depressed, a decision is made (n43) as to whether or not the registered numerical value has been stored in the register buffer. When the registered numerical value has been stored, this numerical value is stored as transaction processing data in a transaction processing data buffer which temporarily stores transaction processing data, and the register buffer is cleared (n44). When no numerical value has been input to the register buffer, this means that the transaction processing data is not input but skipped. More specifically, the input transaction processing data is decided to be data which is to be directly entered later to the automatic transaction processing unit, and a skip code (e.g., "X") is stored in the transaction processing data buffer (n45). Next, the decided input data is displayed in (n46), and a confirmation entry by the user is received (n47). If the user depresses the YES key, indicating confirmation, the process returns to the main routine, whereas, if the NO key is depressed, indicating no confirmation, the buffered data is cleared in (n44), and the process returns to the stand-by routine including (n40) and (n41). It should be noted that the transaction processing data buffer has an arrangement similar to the transaction processing data storage area (M5), and the stored contents are moved in (n32).

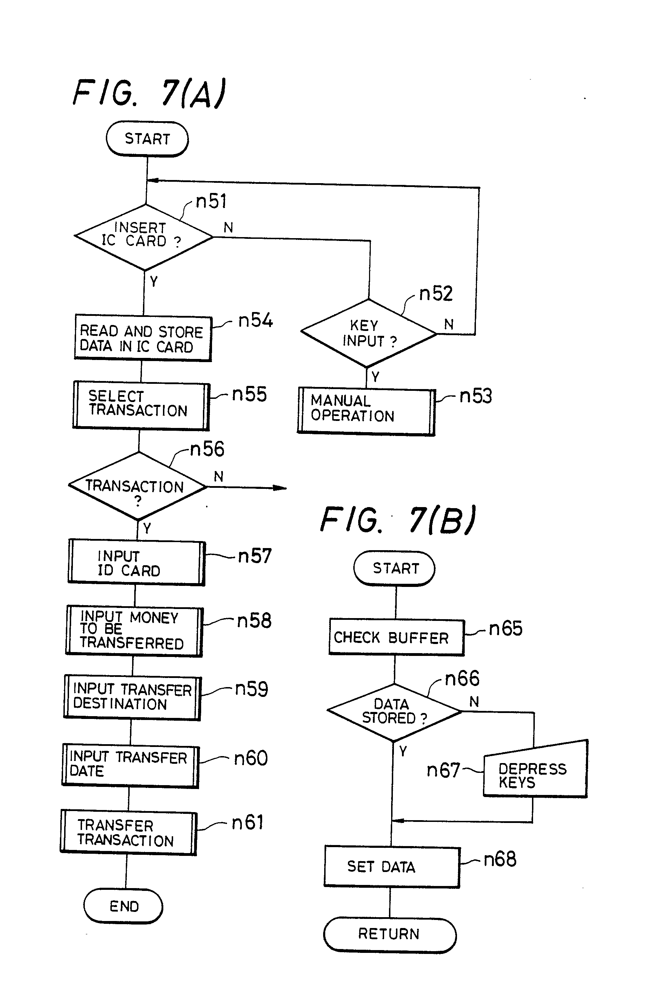

Fig. 7(A) is a flow chart showing the operation of the control section in the ATM. The process stands by until the IC card is inserted in (n51) or any of the keys are depressed in (n52). When it is determined in (n51) that the IC card inserted, the process proceeds to (n54) and the steps following it to execute various transaction processing operations. More specifically, the card data and transaction processing data which are stored in the IC card are read and buffered in predetermined areas. Thereafter, a transaction selecting subroutine (n55) is executed on the basis of the buffered transaction processing data and the like, and the process then branches off to a selected transaction processing operation in (n56). A transfer transaction processing operation will be explained below. In the transfer transaction processing operation, an identification code input subroutine (n57), a transferred money setting subroutine (n58), a transfer destination setting subroutine (n59) and a transfer data input subroutine (n60) are executed. The transfer transaction processing is executed on the basis of the transaction processing data set in these subroutines.

Fig. 7(B) is a flow chart showing the steps executed in each of the above-mentioned subroutines (n57...n60). First, a determination is made (n66) as to whether or not the corresponding transaction processing data has been previously stored in the IC card and from there into the automatic transaction processing unit in step (n54), by making reference to the buffer into which the transaction processing data on the card has been read in (n65). For example, for subroutine (n57), a determination is made on whether the ID code is stored in the buffer. When the predetermined data has been stored in the buffer, this data is set as transaction processing data used in the relevant subroutine (n68), and the process then returns to the main routine. On the other hand, when the corresponding transaction processing data has not been stored in the buffer, the required data, which is entered by depressing the keys displayed on the CRT 25, is received in (n67), and the input data is set as the corresponding transaction processing data (n68) and the process then returns to the main routine.

The keyboard 13 and (n23) to (n28), together with the subroutine shown in Fig. 6(C), correspond to the transaction processing data receiving means according to the present invention, and the RAM 14 and (n32) correspond in combination to the transaction processing data storage means according to the present invention. Further, (n54) and (n65) correspond in combination to the transaction processing data read means according to the present invention and (n67) corresponds to the input data receiving means according to the present invention for receiving transaction data not previously stored in the transaction processing data storage means.

Thus, the IC card transaction system enables a desired part of the data required for each individual transaction processing to be stored in the IC card in advance, and it is possible to omit those data entry operations which have been conducted with respect to the IC card in advance by inserting the card into the ATM. Accordingly, it is possible to reduce the tine during which each transaction occupies the ATM, and transaction processing can be conducted quickly. Thus, it is possible to improve the operating efficiency of the ATM and minimize entry problems in transaction processing operations.

Further, since only a desired part of the needed transaction processing data is stored in the IC card in advance, even if an IC card having transaction processing data set therein should be lost, a finder of this card cannot improperly use it since entry of additional necessary transaction processing data is still required. In addition, a desired transaction can be executed within a minimum time at the automatic transaction processing unit by entering already decided transaction processing data in advance in the IC card and skipping entry of matter which cannot be determined until the time when a particular transaction is actually conducted.

Further, the IC card is provided with LCD display 12, and 100 records stored in the memory as transaction history data. Therefore, it is also possible to display the transaction history data on the display 12 by actuating predetermined keys.

While a preferred embodiment of the invention has been shown and described, it is apparent that many modifications can be made thereto without departing from the spirit and scope of the invention. Accordingly, the invention is not limited by the foregoing description, but is only limited by the scope of the appended claims.

## Claims

1. An IC card transaction system comprising:
an IC card having transaction processing data receiving means for receiving a desired part of transaction processing data required for an individual transaction processing, including the kind of transaction and an amount of money involved in the transaction, and transaction processing data storage means for storing the transaction processing data entered by said transaction processing data receiving means; and
an automatic transaction processing unit adapted to receive said IC card and process a transaction based on transaction processing data stored in said IC card, said unit having transaction processing data reading means for reading out transaction processing data from said IC card required in the processing of a transaction from said transaction data storage means, and input data receiving means for receiving transaction processing data required for said transaction which has not been previously stored in said transaction processing data storage means.

2. An IC card transaction system as in Claim 1, wherein said automatic transaction processing unit comprises:
a buffer memory for storing said transaction processing data read from said IC card,
means of checking said buffer to determine if transaction data required in the processing of said transaction is stored therein, and

means responsive to the lack of said required data in said buffer for receiving said required data by said input data receiving means.

3. An IC card transaction system as in Claim 1, wherein said transaction processing data further includes one or more of an identification code, destination of transfer data, and a date of transfer data.

4. An IC card transaction system as in Claim 1 wherein said receiving means of said IC card includes means for storing a "skip" code in said transaction processing data storage means corresponding to those portions of said required transaction processing data which are not received by said receiving means.

# FIG. 1(A)

# FIG. 1(B)

0 247 623

# FIG. 2

10 : LSI

DISPLAY — 12

IC CARD CONTACTS — 11

CONTROLLER — 102

100 — CPU | MASK ROM

LCD DRIVER — 103

101

KEYBOARD — 13

14 — RAM

15

# F I G. 3

PROGRAM — M1

KEY CODE TABLE — M2

BANK CODE — M30

BRANCH CODE — M31

ACCOUNT NO. — M32

IDENTIFICATION CODE NO. — M33

SAVING BALANCE — M34

EFFECTIVE CODE — M35

} M3 : CARD DATA

DATA FOR TRANSACTION HISTORY — M4

AMOUNT — M50

SORT — M51

CODE OF TRANSFER DESTINATION — M52

NAME OF TRANSFER DESTINATION — M53

DATE OF TRANSFER — M54

} M5 : TRANSACTION DATA

# F I G. 4

# FIG. 5

DISPLAY `32`

TOUCH PANEL `33`

IC CARD READER/WRITER `34`

MAGNETIC CARD READER `35`

BANK NOTE PROCESSING SECTION `36`

COIN PROCESSING SECTION `37`

BANKBOOK PROCESSING SECTION `38`

COMMUNICATION CONTROL SECTION `39`

TO CENTER

INTERFACE `31`

ROM `29`

CPU `28`

RAM `30`

IC `1`

LSI `10`

`11`

RAM `14`

0 247 623

# FIG. 6(A)

POWER ON

**START**

CALCULATOR MODE — n1

DEPRESS "OPEN" KEY — n2

REQUEST ID CODE — n3

INPUT ID CODE — n4

CHECK ID CODE ? — n5
— N
— Y

TRANSACTION CARD MODE — n10

ERROR OCCURS THIRST ? — n6
— Y
— N

CARD FUNCTION IS LOCKED. — n7

DISPLAY "ERROR" — n8

DEPRESS "YES" KEY. — n9

① 

SELECT DESIRED TRANSACTION — n11

INPUT TRANSACTION CODE — n12

CHECK TRANSACTION CODE ? — n13
— N
— Y

②

## FIG. 6(B)

```
        ┌─2─┐
        │   │
        ▼
   ⟨ CONFIRM      ⟩── n20
   ⟨ SELECTED     ⟩
   ⟨ TRANSFER     ⟩
   ⟨ TRANSACTION  ⟩
        │
   ┌────────────┐── n21
   │ INPUT      │
   │ CONFIRMATION│
   └────────────┘
        │
      ◇ n22
 (1)──N  ◇ YES ? ◇
         │Y
   ⟨ REQUEST FOR          ⟩── n23
   ⟨ INPUTTING THE AMOUNT ⟩
   ⟨ OF MONEY TO BE       ⟩
   ⟨ TRANSFERRED          ⟩
        │
   ║ INPUT       ║── n24
   ║ RECEIPTION  ║
   ║ SUBROUTINE  ║
        │
   ⟨ REQUEST FOR     ⟩── n25
   ⟨ INPUTTING THE   ⟩
   ⟨ DESTINATION     ⟩
   ⟨ OF TRANSFER     ⟩
        │
   ║ INPUT       ║── n26
   ║ RECEIPTION  ║
   ║ SUBROUTINE  ║
        │
   ⟨ REQUEST FOR     ⟩── n27
   ⟨ INPUTTING THE   ⟩
   ⟨ DATE OF         ⟩
   ⟨ TRANSFER        ⟩
        │
   ║ INPUT       ║── n28
   ║ RECEIPTION  ║
   ║ SUBROUTINE  ║
        │
       (3)
```

```
       (3)
        │
   ⟨ DISPLAY     ⟩── n29
   ⟨ TRANSFER    ⟩
   ⟨ FEE         ⟩
        │
   ┌────────────┐── n30
   │ CONFIRMATION│
   │ FOR RECEIPT OF│
   │ THE FEE     │
   └────────────┘
        │
      ◇ n31
   ◇ YES ? ◇──N──(1)
        │Y
   ┌────────────┐── n32
   │ STORE      │
   │ TRANSACTION│
   │ DATA       │
   └────────────┘
        │
     ( END )
```

0 247 623

# FIG. 6(C)

```
        START
          │
          ▼
       ┌─────────┐  ╭─ n40
      ╱  DEPRESS  ╲        N
     ╱   "ENT" KEY  ╲ ──────────────────────────┐
     ╲      ?       ╱                            │
      ╲           ╱                              │
       └─────────┘                               │
          │ Y                                     │
          ▼                                        │
       ┌─────────────┐  ╭─ n43                      │
  N   ╱  NUMERICAL    ╲        ┌──────────┐  ╭─ n41 │
 ┌── ╱  VALUE REGISTERED╲     ╱  DEPRESS   ╲    N    │
 │    ╲   IN BUFFER?    ╱    ╱  "TEN" KEY ?  ╲ ──────▶
 │     ╲              ╱      ╲               ╱        │
 │      └───────────┘         ╲            ╱          │
 │          │ Y                └─────────┘            │
 │          ▼                     │ Y                  │
 │                                ▼                     │
┌──────────────┐ ╭n45  ┌──────────────────┐ ╭n44   ┌──────────────┐ ╭n42
│ STORE "SKIP" │      │ STORE THE VALUE     │      │ STORE KEY      │
│ CODE IN DATA │      │ IN DATA BUFFER       │      │ INPUT IN BUFFER │
│ BUFFER       │      │ AND CLEAR THE BUFFER │      └──────────────┘
└──────────────┘      └──────────────────┘               │
 │                        │                               │
 └────────────────────────┤                               │
                          ▼                                │
                   ╭──────────╮ ╭─ n46                      │
                  │  DISPLAY    │                           │
                  │ CONFIRMATION │                          │
                   ╰──────────╯                             │
                          │                                 │
                          ▼                                  │
                   ┌──────────┐ ╭─ n47                        │
                  │  INPUT      │                             │
                  │ CONFIRMATION │                            │
                   └──────────┘                               │
                          │                                   │
                          ▼                                    │
                     ┌─────────┐  ╭─ n48                        │
                    ╱ CONFIRMATION ╲     N                      │
                    ╲      ?       ╱ ───────────┐               │
                     └─────────┘                │               │
                          │ Y                    ▼               │
                          ▼            ┌──────────────┐          │
                       RETURN    n49 ─ │ CLEAR         │          │
                                       │ DATA BUFFER   │ ─────────┘
                                       └──────────────┘
```

## FIG. 7(A)

```
        ( START )
            │
            ▼
      n51 ╱────────╲   N
      ╱  INSERT    ╲──────────────┐
      ╲  IC CARD ? ╱              │
       ╲──────────╱               │
            │ Y                    │
            ▼                      ▼
   ┌──────────────────┐  n52 ╱────────╲  N
   │ READ AND STORE   │─n54  ╱   KEY   ╲──────┘
   │ DATA IN IC CARD  │      ╲  INPUT ? ╱
   └──────────────────┘       ╲────────╱
            │                      │ Y
            ▼                      ▼
   ┌──────────────────┐    ┌──────────────┐
   │ SELECT           │─n55│ MANUAL       │─n53
   │ TRANSACTION      │    │ OPERATION    │
   └──────────────────┘    └──────────────┘
            │
            ▼
      n56 ╱────────╲   N
      ╱ TRANSACTION ╲──────────▶
      ╲     ?       ╱
       ╲──────────╱
            │ Y
            ▼
   ┌──────────────────┐
   │ INPUT            │─n57
   │ ID CARD          │
   └──────────────────┘
            │
            ▼
   ┌──────────────────┐
   │ INPUT MONEY      │─n58
   │ TO BE            │
   │ TRANSFERRED      │
   └──────────────────┘
            │
            ▼
   ┌──────────────────┐
   │ INPUT TRANSFER   │─n59
   │ DESTINATION      │
   └──────────────────┘
            │
            ▼
   ┌──────────────────┐
   │ INPUT TRANSFER   │─n60
   │ DATE             │
   └──────────────────┘
            │
            ▼
   ┌──────────────────┐
   │ TRANSFER         │─n61
   │ TRANSACTION      │
   └──────────────────┘
            │
            ▼
        (  END  )
```

## FIG. 7(B)

```
        ( START )
            │
            ▼
   ┌──────────────────┐
   │ CHECK BUFFER     │─n65
   └──────────────────┘
            │
            ▼
      n66 ╱────────╲   N
      ╱    DATA    ╲──────────┐
      ╲  STORED ?  ╱          │
       ╲──────────╱           ▼
            │ Y      ┌──────────────┐
            │   n67─ │ DEPRESS      │
            │        │ KEYS         │
            │        └──────────────┘
            ◀────────────────┘
            ▼
   ┌──────────────────┐
   │ SET DATA         │─n68
   └──────────────────┘
            │
            ▼
       ( RETURN )
```